# EUROPEAN PATENT SPECIFICATION

(11) **EP 4 583 120 B1**
(45) Date of publication and mention of the grant of the patent: **04.03.2026**
(21) Application number: 22957904.0
(22) Date of filing: 26.10.2022
(51) Int. Cl.: G21C 15/04, G21C 15/14, G21C 5/10, G21C 3/322, G21C 7/32

(54) **REACTOR VORTEX SUPPRESSION AND FLOW DISTRIBUTION DEVICE**
VORRICHTUNG ZUR UNTERDRÜCKUNG UND VERTEILUNG VON REAKTORWIRBELN
DISPOSITIF DE SUPPRESSION DE TOURBILLONS ET DE DISTRIBUTION DE FLUX DE RÉACTEUR

(30) Priority: 09.09.2022 CN 202211101821
(43) Date of publication of application: 09.07.2025
(73) Proprietor: China Nuclear Power Design Company Ltd. (Shenzhen), Shenzhen, Guangdong 518100 (CN); China Nuclear Power Engineering Co., Ltd., Shenzhen, Guangdong 518124 (CN); China General Nuclear Power Corporation, Shenzhen, Guangdong 518026 (CN); CGN Power Co., Ltd., Shenzhen, Guangdong 518026 (CN)
(72) Inventor: DUAN, Yuangang, Shenzhen, Guangdong 518124 (CN); FANG, Jian, Shenzhen, Guangdong 518124 (CN); PI, Jianhong, Shenzhen, Guangdong 518124 (CN); MO, Shaojia, Shenzhen, Guangdong 518124 (CN); LI, Yuezhong, Shenzhen, Guangdong 518124 (CN); RAN, Xiaobing, Shenzhen, Guangdong 518124 (CN); DENG, Xiaoyun, Shenzhen, Guangdong 518124 (CN); LIU, Yanwu, Shenzhen, Guangdong 518124 (CN); CHEN, Yongchao, Shenzhen, Guangdong 518124 (CN); WEI, Xingfang, Shenzhen, Guangdong 518124 (CN)
(74) Representative: Westphal, Mussgnug & Partner, Patentanwälte mbB
(86) International application number: PCT/CN2022/127786
(87) International publication number: WO 2024/050939

(56) References cited:
- CN-A- 102 800 371
- CN-A- 103 377 735
- CN-A- 103 377 735
- CN-A- 103 871 500
- CN-A- 103 971 763
- CN-A- 103 971 763
- CN-A- 107 221 368
- CN-A- 112 185 598
- CN-B- 102 800 371
- CN-B- 112 185 600
- US-A- 5 319 692

## Description

### FIELD

The invention relates to the technical field of nuclear power plant reactor, particularly a reactor vortex suppression and flow distribution device.

### BACKGROUND

The pressurized water reactor of a nuclear power plant consists of a reactor pressure vessel (RPV), reactor internals (RVI), control rod drive mechanism, reactor core parts, reactor core instruments, and related parts. The reactor internals, together with the pressure vessel and fuel assembly structure itself, provide reasonable flow channels for the reactor core. Coolant flows in from the inlet nozzle of the reactor pressure vessel, enters the annular downcomer, then enters the lower chamber, flows through the flow distribution device and the reactor core lower support plate (LSP), and flows upward into the reactor core to realize reactor core cooling.

The coolant entering the lower chamber from the annular downcomer produces a lot of vortex flows in the lower chamber due to the flow channel change sharply, which makes the flow distribution of the fuel assemblies entering different positions of the reactor core uneven, and a fluid pulsation phenomenon appears at the inlet of the reactor core, which leads to the low-frequency oscillation phenomenon of the fuel assemblies in the reactor core and causes the power fluctuation of the reactor.

In the prior art, a flow distribution device or a structural device with similar functions is usually arranged below the reactor core. After the coolant flows through the flow distribution device and the porous reactor core lower support plate, the flow will be distributed, thereby causing the flow in an inlet of the reactor core to be uniformly distributed, and the uniformity of the distribution to be within an acceptable degree. However, most of the existing related devices have many parts and complex structures, which cannot be popularized for use; there is still space for improvement in the effect of suppressing vortex flow and reducing fluid pulsation in the actual use of the existing reactor flow distribution device.

Reference is made to the following relevant prior art publications CN 103 971 763 A, CN 112 185 600 B, CN 103 377 735 A an CN 102 800 371 B.

### SUMMARY

### BRIEF DESCRIPTION OF THE DRAWINGS

The technical problem to be solved by the invention is to provide an improved reactor vortex suppression and flow distribution device.

The technical scheme adopted by the invention to solve the technical problems is as follows: a reactor vortex suppression and flow distribution device is arranged in a reactor pressure vessel; the reactor vortex suppression and flow distribution device comprises a reactor core lower support plate arranged at the bottom of a reactor core in a pressure vessel and a convex head connected below the reactor core lower support plate;

The convex head is provided with a plurality of through holes for coolant to flow in;

A first coolant passage is defined between the convex head and the lower head of the reactor pressure vessel, a plurality of disturbance columns are distributed at intervals between the convex head and the reactor core lower support plate, and the disturbance columns define a plurality of second coolant passages between the convex head and the reactor core lower support plate.

Preferably, the number of the disturbance columns is 8-20.

Preferably, the diameters of the disturbance columns are 5mm-100 mm.

Preferably, the thickness of the convex head is 20mm-150 mm.

Preferably, the width at various locations of the first coolant passage are 0.5-5 times the width of the annular downcomer of the reactor pressure vessel.

Preferably, the convex head comprises a circular bottom plate and an arc-shaped or stepped side plate connected to the peripheral edge of the circular bottom plate, and the top of the side plate is connected to the reactor core lower support plate.

Preferably, a plurality of flange joints are arranged between the top of the side plate and the reactor core lower support plate, and the top of the side plate is hermetically connected to the reactor core lower support plate through the flange joints, and the connection is detachable.

Preferably, when the side plate is a stepped side plate, the steps of the stepped side plate are 2-5 layers.

Preferably, the circular bottom plate is provided with square grid holes, and the side plate is provided with circular through holes.

Preferably, the side lengths of the square lattice hole are 20mm-300 mm.

Preferably, the diameters of the circular through holes are 20mm-200 mm.

The invention has at least the following beneficial effects: the reactor vortex suppression and flow distribution device of the invention has few parts and a simple structure, and the coolant is configured to sequentially flow through the first coolant passage, through holes in the convex head, the second coolant passage formed by the disturbance columns arranged at intervals, and the through hole in the reactor core lower support plate and then enter the reactor core. The generation of vortex flow can be effectively suppressed during the flow of coolant, thus effectively reducing the pulsation phenomenon of coolant fluid entering an inlet of the reactor core from the reactor core lower support plate. At the same time, the coolant flow rate is redistributed, and the flow in an inlet of the reactor core to be uniformly distributed, and the uniformity of the distribution to be within an acceptable degree.

### DETAILED DESCRIPTION

The invention will be further described with reference to the attached drawings and examples, in which:
FIG. 1 is a longitudinal sectional view of a reactor vortex suppression and flow distribution device according to embodiment 1 of the present invention;
FIG. 2 is a longitudinal sectional view of a reactor vortex suppression and flow distribution device according to embodiment 2 of the present invention; and
FIG. 3 is a transverse sectional view of a reactor vortex suppression and flow distribution device according to embodiment 2 of the present invention.

### Detailed description

In order to have a clearer understanding of the technical features, purposes, and effects of the present invention, specific embodiments of the present invention will now be described in detail with reference to the attached drawings.

The terms "first" and "second" are only used for convenience of description, and cannot be understood as indicating or implying relative importance or implicitly indicating the number of technical features.

### Example 1:

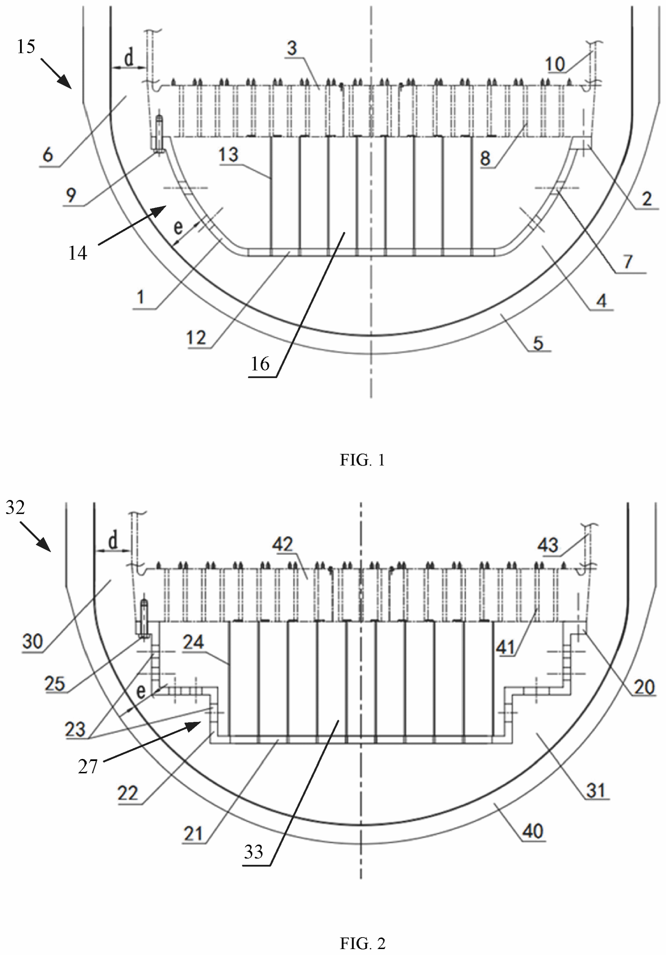

As shown in FIG. 1, the reactor vortex suppression and flow distribution device is arranged in the reactor pressure vessel 15; the reactor vortex suppression and flow distribution device includes a reactor core lower support plate 3 and a convex head 14.

The reactor core lower support plate 3 is arranged at the bottom of a reactor core (not shown in the drawings) inside the reactor pressure vessel 15, and the convex head 14 is connected below the reactor core lower support plate 3. The convex head 14 is provided with a plurality of through holes for coolant to flow in.

A first coolant passage 4 is defined between the convex head 14 and the lower head 5 of the reactor pressure vessel 15. A plurality of disturbance columns 13 are distributed at intervals between the convex head 14 and the reactor core lower support plate 3, and the disturbance columns 13 define a plurality of second coolant passages 16 between the convex head 14 and the reactor core lower support plate 3.

Specifically, as shown in FIG. 1, first, in the lower chamber of the reactor pressure vessel 15, a first coolant passage 4 is defined between the outer peripheral surface of the convex head 14 and the inner wall surface of the lower head 5 of the reactor pressure vessel, and the inlet of the first coolant passage 4 is located at the bottom of the annular downcomer 6 in the reactor pressure vessel 15.

Without the convex head 14, when the coolant enters the lower chamber of the reactor pressure vessel 15 through the annular downcomer 6, a large number of vortices will be generated in the lower chamber due to the abrupt change of the flow channel of coolant fluid and the arc surface guiding effect of the lower head 5. After the convex head 14 is provided, the coolant is configured to flow through the first coolant passage 4, such that the flow channel of coolant fluid changes gently, and its flow field characteristics are improved, which can suppress the generation of vortex flow at the bottom cavity of the reactor near the lower head 5 to a certain extent.

Secondly, the coolant fluid flows in from the through holes of the convex head 14, and new flow channels are formed in a plurality of through holes, where the flow rate of the coolant is redistributed, such that part of the vortex flow characteristics of the coolant fluid can be eliminated.

Finally, the disturbance columns 13 are distributed at intervals in the cavity between the inner peripheral surface of the convex head 14 and the reactor core lower support plate 3, to define a second coolant passage 16 for the coolant to flow vertically upwards to the through hole 8, and the second coolant passage 16 can further guide the coolant fluid here to flow in the vertically upward direction. Furthermore, the vortex rotation characteristics of the coolant fluid micro-parcels are affected on the micro level, and the macro level shows that the chaotic degree of the coolant fluid flow is reduced, and most of the coolant vortex is effectively dispersed here.

To sum up, the coolant is configured to flow through the first coolant passage 4, the through hole on the convex head 14, the second coolant passage 16, and the through hole 8 on the reactor core lower support plate 3 in turn, such that the generation of vortex flow can be effectively suppressed during the flow of coolant, which can effectively improve the pulsation phenomenon of coolant fluid entering an inlet of the reactor core from the reactor core lower support plate 3 and avoid the vortex shedding in the lower chamber of the reactor pressure vessel 15. At the same time, the flow distribution evenness at an inlet of the reactor core is good. After testing, the uneven coefficient of coolant flow distribution at the inlet of the reactor core is not more than 12%, which can meet the requirements of relevant design specifications of nuclear power plants.

It is tested that the different number of the disturbance columns 13 and the different diameter of the disturbance columns 13 affect the normal circulating flow of the coolant to varying degrees while suppressing the vortex flow.

For example, if the number and the diameter of the disturbance columns 13 are too large, the flow resistance of coolant in the lower chamber of the reactor will increase. In the elimination of the vortex at the same time, the flow of coolant fluid will be slowed down or hindered, that is, the circulating flow rate of reactor coolant fluid will be affected, resulting in poor smoothness during the circulating flow and failure to meet the design requirements. If the number and the diameter of the disturbance columns 13 are too small, the vortex suppression effect will be poor.

Through hydraulic numerical simulation analysis, it is preferable that the number of the disturbance columns 13 is 8-20 and the diameters of the disturbance columns 13 are 5mm-100 mm, which can achieve a good vortex suppression effect without affecting the normal circulating flow of coolant fluid.

It is tested that the greater the thickness of the convex head 14, the greater the length of the through hole (the length of the flow segment) on the convex head 14, as a result, the greater the pressure drop loss of the coolant fluid flowing through the through hole, and the better the effect of suppressing vortex and flow redistribution.

However, if the thickness of convex head 14 is too large, it results in the pressure drop loss along the flow path of coolant fluid flowing through the through hole will be too large, which will slow down or hinder the flow of coolant fluid. From a macro perspective, it will adversely affect the smoothness of reactor coolant fluid during normal circulating flow.

After many simulation tests and analyses, comprehensively considering the smoothness of coolant during circulating flow, vortex suppression effect, and flow distribution effect, it is preferable that the thickness of the convex head 14 is 20mm ~ 150 mm.

After testing, the different width of the first coolant passage 4 has different degrees of impact on vortex suppression and flow distribution effects.

For example, if the width of the first coolant passage 4 is too small, it will be unfavorable for the smoothness of coolant fluid during circulating flow.

For another example, if the width of the first coolant passage 4 is too large or too small, the flow channel of coolant from the annular downcomer 6 to the first coolant passage 4 will change sharply, which will lead to a vortex suppression effect cannot meet the expected.

After many simulation tests and analyses, comprehensively considering the smoothness of coolant during circulating flow, vortex suppression effect, and flow distribution effect, it is preferable that the width e at various locations of the first coolant passage 4 are 0.5~5 times the width d of the annular downcomer 6. Specifically, referring to FIG. 1, the width e refers to the vertical distance between the outer peripheral surface of the convex head 14 and the inner wall surface of the lower head 5 located at the bottom.

Further, the convex head 14 includes a circular bottom plate 12 and an arc-shaped side plate 1 connected to the peripheral edge of the circular bottom plate 12, and the top of the arc-shaped side plate 1 is connected to the reactor core lower support plate 3. The arc-shaped side plate 1 as a whole can be hemispherical, semi-ellipsoidal, dish-shaped, or other shapes according to the difference in the radius of the curvature of the arc surface and the contour shapes.

Specifically, the circular bottom plate 12 and the arc-shaped side plate 1 can be connected by bolting, welding, or splicing.

Further, a plurality of flange joints are arranged between the top of the arc-shaped side plate 1 and the reactor core lower support plate 3, and the top of the arc-shaped side plate 1 is hermetically connected to the reactor core lower support plate 3 through the flange joints, and the connection is detachable.

Specifically, referring to FIGS. 1-2, the reactor core lower support plate 3 is connected to the hanging baskets 10 of the reactor internals by welding. The flange joint includes bolt 9 and flange plate 2. The bolt 9 and the flange plate 2 cooperate to lock the arc-shaped side plate 1 and the reactor core lower support plate 3, so that the arc-shaped side plate 1 and the reactor core lower support plate 3 are sealed and attached, and at the same time, it has the advantages of convenient installation, disassembly and maintenance. The related detection operation can be realized in the installation gap of the radial support keys during the installation stage of the reactor internals.

The flange plate 2 and the arc-shaped side plate 1 can be integrally forged or pressed by plates, and they can also be connected by welding.

Understandably, in other embodiments, the reactor core lower support plate 3 and the arc-shaped side plate 1 can also be fixed by welding.

Further, the circular bottom plate 12 is provided with square grid holes (not shown in the drawings), and the arc-shaped side plate 1 is provided with circular through holes 7.

Specifically, after flowing through the first coolant passage 4, one part of the coolant is configured to flow into the second coolant passages 16 from the circular through holes 7 in the arc-shaped side plate 1, and the other part of the coolant is configured to enter the second coolant passages 16 from the square grid holes on the circular bottom plate 12.

The flow direction of the coolant passing through the circular bottom plate 12 is vertically upward, and the coolant will directly enter the through hole 8 on the reactor core lower support plate 3 after flowing vertically upward. The through hole 8 on the reactor core lower support plate 3 is square in shape. To reduce the change of coolant flow characteristics caused by the shape change of the two flow cross-sectional area of coolant fluid, the grid holes on the circular bottom plate 12 are also arranged corresponding to the shape of the square through holes 8.

According to the circular through holes 7 distributed in different positions on the arc-shaped side plate 1, the circular through holes 7 include oblique through holes and horizontal through holes.

According to the test, the different side length of square grid holes affects the flow rate of coolant fluid from the first coolant passage 4 to the second coolant passage 16 and the pressure drop loss during the flow. Accordingly, the vortex suppression effect during this flow and the normal circulating flow of coolant fluid in the reactor are affected to varying degrees by the different side length of square grid holes.

For example, if the side lengths of the square grid holes are small, and the area of circular bottom plate 12 is kept constant, the square grid holes will be dense, which the vortex suppression effect and flow redistribution effect are better. However, if the side lengths of the square grid holes are too small, the distribution of grid holes will be too dense, which can slow down or hinder the coolant from passing through the grid holes when the coolant flow rate is fast, thus affecting the overall smoothness of reactor coolant during circulating flow.

After many numerical simulation test analyses, it is preferable that the side lengths of the square grid holes are 20mm ~ 300 mm.

After testing, the different diameters of the circular through holes 7 also have different degrees of influence on the vortex suppression effect and the smoothness of the coolant during circulating flow, the principle of which is similar to the consideration in the design of the thickness of the convex head 14. Under the condition that the number of the circular through holes 7 is kept constant, the smaller the diameter of the circular through holes 7, the smaller the flow cross-sectional area of coolant flowing through them, and consequently, the better the effect of coolant flow redistribution and the more even the flow distribution.

However, the diameters of the circular through holes 7 are too small, which will slow down or hinder the flow of coolant fluid, and from a macro point of view, it will adversely affect the smoothness of reactor coolant fluid during normal circulating flow.

After many numerical simulation test analyses, it is preferable that the diameters of the circular through holes 7 are 20mm ~ 200 mm.

### Example 2:

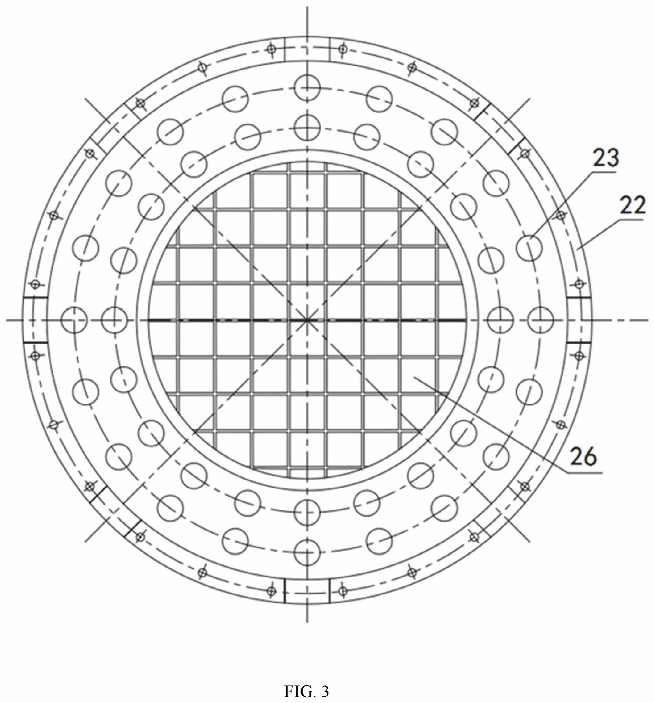

As shown in FIGS. 2-3, the reactor vortex suppression and flow distribution device is arranged in the reactor pressure vessel 32; the reactor vortex suppression and flow distribution device includes a reactor core lower support plate 42 and a convex head 27.

The reactor core lower support plate 42 is arranged at the bottom of a reactor core (not shown in the drawings) inside the reactor pressure vessel 32, and the convex head 27 is connected below the reactor core lower support plate 42. The convex head 27 is provided with a plurality of through holes for coolant to flow in.

A first coolant passage 31 is defined between the convex head 27 and the lower head 40 of the reactor pressure vessel 32. A plurality of disturbance columns 24 are distributed at intervals between the convex head 27 and the reactor core lower support plate 42, and the disturbance columns 24 define a plurality of second coolant passages 33 between the convex head 27 and the reactor core lower support plate 42.

Specifically, as shown in FIG. 1, first, in the lower chamber of the reactor pressure vessel 32, a first coolant passage 31 is defined between the outer peripheral surface of the convex head 27 and the inner wall surface of the lower head 40 of the reactor pressure vessel, and the inlet of the first coolant passage 31 is located at the bottom of the annular downcomer 30 in the reactor pressure vessel 32.

Without the convex head 27, when the coolant enters the lower chamber of the reactor pressure vessel 32 through the annular downcomer 30, a large number of vortices will be generated in the lower chamber due to the abrupt change of the flow channel of coolant fluid and the arc surface guiding effect of the lower head 40. After the convex head 27 is provided, the coolant is configured to flow through the first coolant passage 31, such that the flow channel of coolant fluid changes gently, and its flow field characteristics are improved, which can suppress the generation of vortex flow at the bottom cavity of the reactor near the lower head 40 to a certain extent.

Secondly, the coolant fluid flows in from the through holes of the convex head 27, and new flow channels are formed in a plurality of through holes, where the flow rate of the coolant is redistributed, such that part of the vortex flow characteristics of the coolant fluid can be eliminated.

Finally, the disturbance columns 24 are distributed at intervals in the cavity between the inner peripheral surface of the convex head 27 and the reactor core lower support plate 42, to define a second coolant passage 33 for the coolant to flow vertically upwards to the through hole 41, and the second coolant passage 33 can further guide the coolant fluid here to flow in the vertically upward direction. Furthermore, the vortex rotation characteristics of the coolant fluid micro-parcels are affected on the micro level, and the macro level shows that the chaotic degree of the coolant fluid flow is reduced, and most of the coolant vortex is effectively dispersed here.

To sum up, the coolant is configured to flow through the first coolant passage 31, the through hole on the convex head 27, the second coolant passage 33, and the through hole 41 on the reactor core lower support plate 42 in turn, such that the generation of vortex flow can be effectively suppressed during the flow of coolant, which can effectively improve the pulsation phenomenon of coolant fluid entering an inlet of the reactor core from the reactor core lower support plate 42 and avoid the vortex shedding of the lower chamber structure of the reactor pressure vessel 32. At the same time, the flow distribution evenness at an inlet of the reactor core is good. After testing, the uneven coefficient of coolant flow distribution at the inlet of the reactor core is not more than 12%, which can meet the requirements of relevant design specifications of nuclear power plants.

It is tested that the number of the disturbance columns 24 and the diameter of the disturbance columns 24 affect the normal circulating flow of the coolant to varying degrees while suppressing the vortex flow.

For example, if the number and the diameter of the disturbance columns 24 are too large, the flow resistance of coolant in the lower chamber of the reactor will increase. In the elimination of the vortex at the same time, the flow of coolant fluid will be slowed down or hindered, that is, the circulating flow rate of reactor coolant fluid will be affected, resulting in poor smoothness during the circulating flow and failure to meet the design requirements. If the number and the diameter of the disturbance columns 24 are too small, the vortex suppression effect will be poor.

Through hydraulic numerical simulation analysis, it is preferable that the number of the disturbance columns 24 is 8-20 and the diameters of the disturbance columns 24 are 5mm-100 mm, which can achieve a good vortex suppression effect without affecting the normal circulating flow of coolant fluid.

It is tested that the greater the thickness of the convex head 27, the greater the length of the through hole (the length of the flow segment) on the convex head 27, as a result, the greater the pressure drop loss of the coolant fluid flowing through the through hole, and the better the effect of suppressing vortex and flow redistribution.

However, if the thickness of convex head 27 is too large, it results in the pressure drop loss along the flow path of coolant fluid flowing through the through hole will be too large, which will slow down or hinder the flow of coolant fluid. From a macro perspective, it will adversely affect the normal circulation smoothness of reactor coolant fluid during normal circulating flow.

After many numerical simulation test analyses, comprehensively considering the smoothness of coolant during circulating flow, vortex suppression effect, and flow distribution effect, it is preferable that the thickness of the convex head 27 is 20mm ~ 150 mm.

After testing, the width of the first coolant passage 31 has different degrees of impact on vortex suppression and flow distribution effects. For example, if the width of the first coolant passage 31 is too small, it will be unfavorable for the smoothness of coolant fluid during circulating flow.

For another example, if the width of the first coolant passage 31 is too large or too small, the flow channel of coolant from the annular downcomer 30 to the first coolant passage 31 will change sharply, which will lead to a vortex suppression effect cannot meet the expected.

After many numerical simulation test analyses, comprehensively considering the smoothness of coolant during circulating flow, vortex suppression effect, and flow distribution effects, it is preferable that the width e at various locations of the first coolant passage 31 are 0.5~5 times the width d of the annular downcomer 30. Specifically, referring to FIG. 2, the width e refers to the vertical distance between the outer peripheral surface of the convex head 27 and the inner wall surface of the lower head 40 located at the bottom.

Further, the convex head 27 includes a circular bottom plate 21 and a stepped side plate 22 connected to the peripheral edge of the circular bottom plate 21, and the top of the stepped side plate 22 is connected to the reactor core lower support plate 42. The stepped side plate 22 as a whole can be cylindrical, hemispherical, semi-ellipsoidal, dish-shaped, or other shapes according to the difference in the radius of the curvature of the arc surface and the contour shapes.

The circular bottom plate 21 and the stepped side plate 22 can be connected by bolting, welding, or splicing.

Further, a plurality of flange joints are arranged between the top of the stepped side plate 22 and the reactor core lower support plate 42, and the top of the stepped side plate 22 is hermetically connected to the reactor core lower support plate 42 through the flange joints, and the connection is detachable.

Specifically, referring to FIGS. 1-2, the reactor core lower support plate 42 is connected to the hanging baskets 43 of the reactor internals by welding. The flange joint includes a bolt 25 and a flange plate 20. The bolt 25 and the flange plate 20 cooperate to lock the stepped side plate 22 and the reactor core lower support plate 42, so that the stepped side plate 22 and the reactor core lower support plate 42 are sealed and attached, and at the same time, it has the advantages of convenient installation, disassembly and maintenance. The related detection operation can be realized in the installation gap of the radial support keys during the installation stage of the reactor internals.

The flange plate 20 and the stepped side plate 22 can be integrally forged or pressed by plates, and they can also be connected by welding.

Understandably, in other embodiments, the reactor core lower support plate 42 and the stepped side plate 22 can also be fixed by welding.

According to the test, the different numbers of steps on the stepped side plate 22 have different degrees of influence on the vortex suppression effect and the smoothness of the coolant during circulating flow. In order to form a step shape, the number of steps should be at least two or more. Too many steps will adversely affect the smoothness of coolant during circulating flow. At the same time, if there are too many steps, the flow channel of coolant passing through the first coolant passage 31 will change dramatically, and the vortex suppression effect will be poor.

After many numerical simulation test analyses, it is preferable that the steps of the stepped side plate 22 are 2-5 layers.

Further, the circular bottom plate 21 is provided with square grid holes 26, and the stepped side plate 22 is provided with circular through holes 23.

Specifically, after flowing through the first coolant passage 31, one part of the coolant is configured to flow into the second coolant passages 33 from the circular through holes 23 in the stepped side plate 22, and the other part of the coolant is configured to enter the second coolant passages 33 from the square grid holes 26 in the circular bottom plate 21.

The flow direction of the coolant passing through the circular bottom plate 21 is vertically upward, and the coolant directly will enter the through hole on the reactor core lower support plate 42 after flowing vertically upward. The through hole on the reactor core lower support plate 42 is square in shape. To reduce the change of coolant flow characteristics caused by the shape change of the two flow cross-sectional area of coolant fluid, the grid holes on the circular bottom plate 21 are also arranged corresponding to the shape of the square through holes.

According to the circular through holes 23 distributed in different positions on the stepped side plate 22, the circular through holes 23 include horizontal through holes and vertical through holes.

According to the test, the different side length of the square grid holes 26 affects the flow rate of coolant fluid from the first coolant passage 31 to the second coolant passage 33 and the pressure drop loss during the flow. Accordingly, the vortex suppression effect during this flow and the normal circulating flow of coolant fluid in the reactor are affected to varying degrees by the different side length of the square grid holes.

For example, if the side lengths of the square grid holes 26 are small, and the area of the circular bottom plate 21 is kept constant, the grid holes 26 will be dense, which the vortex suppression effect and the flow redistribution effect are better. However, if the side lengths of the square grid holes 26 are too small, the distribution of grid holes 26 will be too dense, which can slow down or hinder the coolant from passing through the square grid holes when the coolant flow rate is fast, thus affecting the overall smoothness of the reactor coolant during circulating flow.

After many numerical simulation test analyses, it is preferable that the side lengths of the square grid holes 26 are 20mm ~ 300 mm.

After testing, the different diameters of the circular through holes 23 also have different degrees of influence on the vortex suppression effect and the smoothness of the coolant during circulating flow, the principle of which is similar to the consideration in the design of the thickness of the convex head 27. Under the condition that the number of the circular through holes 23 is kept constant, the smaller the diameter of the circular through holes 23, the smaller the flow cross-sectional area of coolant flowing through them, and consequently, the better the effect of coolant flow redistribution and the more even the flow distribution.

However, the diameters of the circular through holes 23 are too small, which will slow down or hinder the flow of coolant fluid, and from a macro point of view, it will adversely affect the smoothness of reactor coolant fluid during normal circulating flow.

After many numerical simulation test analyses, it is preferable that the diameters of the circular through holes 23 are 20mm ~ 200 mm.

## Claims

1. A reactor vortex suppression and flow distribution device, being arranged in a reactor pressure vessel (15, 32); the reactor vortex suppression and flow distribution device comprises a reactor core lower support plate (3, 42) arranged at a bottom of a reactor core in the reactor pressure vessel (15, 32) and a convex head (14, 27) connected below the reactor core lower support plate (3, 42);
the convex head (14, 27) is provided with a plurality of through holes (7, 23) for coolant to flow in;
a first coolant passage (4, 31) is defined between the convex head (14, 27) and a lower head of the reactor pressure vessel (15, 32),
**characterised by**
a plurality of disturbance columns (13, 24) are distributed at intervals between the convex head (14, 27) and the reactor core lower support plate (3 42), and the plurality of disturbance columns (13, 24) define a plurality of second coolant passages (16, 33) between the convex head (14, 27) and the reactor core lower support plate (3, 42).

2. The reactor vortex suppression and flow distribution device according to claim 1, wherein the number of the plurality of disturbance columns (13, 24) is 8-20.

3. The reactor vortex suppression and flow distribution device according to claim 1, wherein the diameters of the plurality of disturbance columns (13, 24) are 5mm-100 mm.

4. The reactor vortex suppression and flow distribution device according to any one of the claims 1-3, wherein the thickness of the convex head (14, 27) is 20mm-150 mm.

5. The reactor vortex suppression and flow distribution device according to any one of the claims 1-3, wherein the width at various locations of the first coolant passage (4, 31) are 0.5-5 times the width of an annular downcomer (6, 30) of the reactor pressure vessel (15, 32).

6. The reactor vortex suppression and flow distribution device according to any one of the claims 1-3, wherein the convex head (14, 27) comprises a circular bottom plate (12, 21) and a side plate (1, 22) connected to a peripheral edge of the circular bottom plate (12, 21) and having an arc-shaped or stepped profile, and a top of the side plate (1, 22) is connected to the reactor core lower support plate (3, 42).

7. The reactor vortex suppression and flow distribution device according to claim 6, wherein a plurality of flange joints are arranged between the top of the side plate (1, 22) and the reactor core lower support plate (3, 42), and the top of the side plate (1, 22) is hermetically connected to the reactor core lower support plate (3, 42) through the flange joints, and a connection between the side plate (1, 22) and the reactor core lower support plate (3, 42) is detachable.

8. The reactor vortex suppression and flow distribution device according to claim 6, wherein when the side plate is a stepped side plate (22), the steps of the stepped side plate are 2-5 layers.

9. The reactor vortex suppression and flow distribution device according to claim 6, wherein the circular bottom plate (12, 21) is provided with square grid holes (26), and the side plate (1, 22) is provided with circular through holes (7, 23).

10. The reactor vortex suppression and flow distribution device according to claim 9, wherein the side lengths of the square grid holes (26) are 20mm-300 mm.

11. The reactor vortex suppression and flow distribution device according to claim 9, wherein the diameters of the circular through holes (7, 23) are 20mm-200 mm.

## Patentansprüche

1. Vorrichtung zur Unterdrückung und Verteilung von Reaktorwirbeln, die in einem Reaktordruckbehälter (15, 32) angeordnet ist; wobei die Vorrichtung zur Unterdrückung und Verteilung von Reaktorwirbeln eine untere Reaktorkernstützplatte (3, 42), die an einem Boden eines Reaktorkerns im Reaktordruckbehälter (15, 32) angeordnet ist, und einen konvexen Kopf (14, 27), der unterhalb der unteren Reaktorkernstützplatte (3, 42) verbunden ist, umfasst;
wobei der konvexe Kopf (14, 27) mit einer Vielzahl von Durchgangslöchern (7, 23) zum Durchfluss von Kühlmittel bereitgestellt ist;
wobei ein erster Kühlmittelkanal (4, 31) zwischen dem konvexen Kopf (14, 27) und einem unteren Kopf des Reaktordruckbehälters (15, 32) definiert ist,
**dadurch gekennzeichnet, dass** eine Vielzahl von Störsäulen (13, 24) in Abständen zwischen dem konvexen Kopf (14, 27) und der unteren Reaktorkernstützplatte (3, 42) verteilt sind, und dass die Vielzahl von Störsäulen (13, 24) eine Vielzahl von zweiten Kühlmittelkanälen (16, 33) zwischen dem konvexen Kopf (14, 27) und der unteren Reaktorkernstützplatte (3, 42) definiert.

2. Vorrichtung zur Unterdrückung und Verteilung von Reaktorwirbeln nach Anspruch 1, wobei die Anzahl der Vielzahl von Störsäulen (13, 24) 8 bis 20 beträgt.

3. Vorrichtung zur Unterdrückung und Verteilung von Reaktorwirbeln nach Anspruch 1, wobei die Durchmesser der Vielzahl von Störsäulen (13, 24) 5 mm bis 100 mm betragen.

4. Vorrichtung zur Unterdrückung und Verteilung von Reaktorwirbeln nach einem der Ansprüche 1 bis 3, wobei die Dicke des konvexen Kopfes (14, 27) 20 mm bis 150 mm beträgt.

5. Vorrichtung zur Unterdrückung und Verteilung von Reaktorwirbeln nach einem der Ansprüche 1 bis 3, wobei die Breite an verschiedenen Stellen des ersten Kühlmittelkanals (4, 31) das 0,5- bis 5-fache der Breite eines ringförmigen Fallrohrs (6, 30) des Reaktordruckbehälters (15, 32) beträgt.

6. Vorrichtung zur Unterdrückung und Verteilung von Reaktorwirbeln nach einem der Ansprüche 1 bis 3, wobei der konvexe Kopf (14, 27) eine kreisförmige Bodenplatte (12, 21) und eine Seitenplatte (1, 22) umfasst, die mit einem Umfangsrand der kreisförmigen Bodenplatte (12, 21) verbunden ist und ein bogenförmiges oder gestuftes Profil aufweist, und eine Oberseite der Seitenplatte (1, 22) mit der unteren Reaktorkernstützplatte (3, 42) verbunden ist.

7. Vorrichtung zur Unterdrückung und Verteilung von Reaktorwirbeln nach Anspruch 6, wobei eine Vielzahl von Flanschverbindungen zwischen der Oberseite der Seitenplatte (1, 22) und der unteren Reaktorkernstützplatte (3, 42) angeordnet ist, und die Oberseite der Seitenplatte (1, 22) über die Flanschverbindungen mit der unteren Reaktorkernstützplatte (3, 42) hermetisch verbunden ist, und eine Verbindung zwischen der Seitenplatte (1, 22) und der unteren Reaktorkernstützplatte (3, 42) lösbar ist.

8. Vorrichtung zur Unterdrückung und Verteilung von Reaktorwirbeln nach Anspruch 6, wobei, wenn die Seitenplatte eine gestufte Seitenplatte (22) ist, die Stufen der gestuften Seitenplatte aus 2 bis 5 Schichten bestehen.

9. Vorrichtung zur Unterdrückung und Verteilung von Reaktorwirbeln nach Anspruch 6, wobei die kreisförmige Bodenplatte (12, 21) mit quadratischen Gitterlöchern (26) bereitgestellt ist und die Seitenplatte (1, 22) mit kreisförmigen Durchgangslöchern (7, 23) bereitgestellt ist.

10. Vorrichtung zur Unterdrückung und Verteilung von Reaktorwirbeln nach Anspruch 9, wobei die Seitenlängen der quadratischen Gitterlöcher (26) 20 mm bis 300 mm betragen.

11. Vorrichtung zur Unterdrückung und Verteilung von Reaktorwirbeln nach Anspruch 9, wobei die Durchmesser der kreisförmigen Durchgangslöcher (7, 23) 20 mm bis 200 mm betragen.

## Revendications

1. Dispositif de suppression de tourbillons et de distribution de flux de réacteur agencé dans une cuve de pression de réacteur (15, 32) ; le dispositif de suppression de tourbillons et de distribution de flux de réacteur comprend une plaque inférieure de support du cœur du réacteur (3, 42) agencée au fond d'un cœur de réacteur dans la cuve de pression de réacteur (15, 32) et une tête convexe (14, 27) reliée sous la plaque inférieure de support du cœur du réacteur (3, 42) ;
la tête convexe (14, 27) est pourvue d'une pluralité de trous traversants (7, 23) destinés à l'écoulement du fluide de refroidissement ;
un premier passage de fluide de refroidissement (4, 31) est défini entre la tête convexe (14, 27) et une tête inférieure de la cuve de pression de réacteur (15, 32),
**caractérisé par le fait qu'**une pluralité de colonnes de perturbation (13, 24) sont réparties à intervalles entre la tête convexe (14, 27) et la plaque inférieure de support du cœur du réacteur (3, 42), et **par le fait que** la pluralité de colonnes de perturbation (13, 24) définit une pluralité de seconds passages de fluide de refroidissement (16, 33) entre la tête convexe (14, 27) et la plaque inférieure de support de cœur de réacteur (3, 42).

2. Dispositif de suppression de tourbillons et de distribution de flux de réacteur selon la revendication 1, dans lequel le nombre de la pluralité de colonnes de perturbation (13, 24) est de 8 à 20.

3. Dispositif de suppression de tourbillons et de distribution de flux de réacteur selon la revendication 1, dans lequel les diamètres de la pluralité de colonnes de perturbation (13, 24) sont de 5 mm à 100 mm.

4. Dispositif de suppression de tourbillons et de distribution de flux de réacteur selon l'une quelconque des revendications 1 à 3, dans lequel l'épaisseur de la tête convexe (14, 27) est de 20 mm à 150 mm.

5. Dispositif de suppression de tourbillons et de distribution de flux de réacteur selon l'une quelconque des revendications 1 à 3, dans lequel la largeur à divers endroits du premier passage de fluide de refroidissement (4, 31) est de 0,5 à 5 fois la largeur d'un descendeur annulaire (6, 30) de la cuve de pression de réacteur (15, 32).

6. Dispositif de suppression de tourbillons et de distribution de flux de réacteur selon l'une quelconque des revendications 1 à 3, dans lequel la tête convexe (14, 27) comprend une plaque de fond circulaire (12, 21) et une plaque latérale (1, 22) reliée à un bord périphérique de la plaque de fond circulaire (12, 21) et présentant un profil en forme d'arc ou en gradins, et le dessus de la plaque latérale (1, 22) est relié à la plaque inférieure de support du cœur du réacteur (3, 42).

7. Dispositif de suppression de tourbillons et de distribution de flux de réacteur selon la revendication 6, dans lequel une pluralité de joints à bride sont disposés entre le haut de la plaque latérale (1, 22) et la plaque inférieure de support du cœur du réacteur (3, 42), et le dessus de la plaque latérale (1, 22) est relié hermétiquement à la plaque inférieure de support du cœur du réacteur (3, 42) par l'intermédiaire des joints à bride, et une liaison entre la plaque latérale (1, 22) et la plaque inférieure de support du cœur du réacteur (3, 42) est détachable.

8. Dispositif de suppression de tourbillons et de distribution de flux de réacteur selon la revendication 6, dans lequel lorsque la plaque latérale est une plaque latérale à gradins (22), les gradins de la plaque latérale à gradins sont de 2 à 5 couches.

9. Dispositif de suppression de tourbillons et de distribution de flux de réacteur selon la revendication 6, dans lequel la plaque de fond circulaire (12, 21) est pourvue de trous de grille carrés (26) et la plaque latérale (1, 22) est pourvue de trous traversants circulaires (7, 23).

10. Dispositif de suppression de tourbillons et de distribution de flux de réacteur selon la revendication 9, dans lequel les longueurs latérales des trous de grille carrés (26) sont de 20 mm à 300 mm.

11. Dispositif de suppression de tourbillons et de distribution de flux de réacteur selon la revendication 9, dans lequel les diamètres des trous traversants circulaires (7, 23) sont de 20 mm à 200 mm.
